# EUROPEAN PATENT APPLICATION

(11) **EP 3 276 975 A1**
(43) Date of publication of application: **31.01.2018**
(21) Application number: 17183751.1
(22) Date of filing: 28.07.2017
(51) Int. Cl.: H04N 21/472, H04N 21/422, G06F 3/0346

(54) **METHOD AND DEVICE FOR CONTROLLING PLAYING STATE**

(30) Priority: 28.07.2016 WO PCT/CN2016/092099
(71) Applicant: Beijing Xiaomi Mobile Software Co., Ltd., Beijing 100085 (CN)
(72) Inventor: LIU, Tong, Haidian District, Beijing 100085 (CN); LU, Yu, Haidian District, Beijing 100085 (CN); LIN, Xingsheng, Haidian District, Beijing 100085 (CN)
(74) Representative: Sadler, Peter Frederick

(57) **Abstract**

The present disclosure relates to a method and a device for controlling a playing state, which is capable of conveniently control playing fast forward or backward a video which is currently being played with simplified user operation. The method includes: upon receipt of a starting event triggered by a peripheral component of a smart device, acquiring (101) rotating information of the smart device; and controlling (102) a playing state of multimedia which is currently being played according to the starting event and the rotating information.

## Description

### TECHNICAL FIELD

The present disclosure generally relates to the technical field of communication and computer processing, and more particularly, to a method and a device for controlling a playing state.

### BACKGROUND

With development of electronic technology, mobile phones, televisions and computers have become popular. Moreover, various devices are equipped with video playing features. Control of a playing progress of a video may be implemented in various ways, such as by pressing a hardware button on a remote controller.

### SUMMARY

In order to solve the problems existing in the related art, the present disclosure provides a method and a device for controlling a playing state.

In a first aspect of the embodiments of the present disclosure, there is provided a method for controlling a playing state, including the following steps:
acquiring rotating information of the smart device, upon receipt of a starting event triggered by a peripheral component of a smart device; and
controlling a playing state of multimedia which is currently being played according to the starting event and the rotating information.

The playing state is the amount of progress a media player function has progressed through the multi-media content (e.g. video and/or audio). For example, the playing state is the amount of time elapsed, or remaining, of currently playing media content. Playing state may be represented, for example, by a progress bar.

The rotating information is information indicative of one or more properties of a rotation of the smart device with respect to any appropriate axis. For example, the rotation may be relative to the ground, or around an axis passing through the smart device, or about an axis external to the smart device. The smart device may include one or more sensors for determining rotations about one or more axis. In addition, or alternatively, the smart device may be connected to another peripheral device, such as a remote control, smart device physical support device (e.g. an augmented/virtual reality head support) or handle, with the separate peripheral device including one or more sensors for determining rotations about one or more axis. The peripheral device may be connected to the smart device via a wireless communication protocol such as Bluetooth.

The technical solution provided by the embodiment of the present disclosure may have the following beneficial effects. In the embodiment, the playing state of the multimedia may be controlled according to rotating information. Moreover, by controlling based on both conditions of the starting event of the peripheral component and rotating information, it can more accurately control fast forward playing of the video, and reduce the probability of false control.

In one embodiment, the peripheral component is a physical button disposed outside of a housing of the smart device, or is a physical button on a remote control device bound with the smart device, and the starting event is triggered by operating the physical button.

The technical solution provided by the embodiment of the present disclosure may have the following beneficial effects. In the embodiment, the starting event may be triggered by physical buttons of various devices, which may be applicable to various application scenarios.

In one embodiment, the peripheral component is a virtual button disposed outside of a housing of the smart device, or is a virtual button on a remote control device bound with the smart device, and the starting event is triggered by operating the virtual button. A virtual button may be a button presented to a user via virtual or augmented reality, such as via virtual reality glasses or a smart device, that the user can interact with to provide an input. A virtual button may also be a button implemented on a remote control device as a touch screen icon or similar. A virtual button may alternatively be a button or input implemented in a touch region of a physical support device supporting the smart device, such as head mounting gear for supporting the smart device display in front of the user's eyes to provide a virtual or augmented reality experience, with the support device being in wireless communication with the smart device via, for example, Bluetooth.

The technical solution provided by the embodiment of the present disclosure may have the following beneficial effects. In the embodiment, the starting event may be triggered by virtual buttons of various devices, which may be applicable to various application scenarios.

In one embodiment, acquiring rotating information of the smart device includes: acquiring the rotating information through a sensor inside the smart device. The sensor may be a gyroscope or accelerometer, for example.

The technical solution provided by the embodiment of the present disclosure may have the following beneficial effects. In the embodiment, the rotating information may be acquired through a sensor of the same device. It may provide a flexible control method which is applicable to various application scenarios.

In one embodiment, acquiring rotating information of the smart device includes: acquiring the rotating information through a remote control device bound with the smart device.

The technical solution provided by the embodiment of the present disclosure may have the following beneficial effects. In the embodiment, the rotating information may be acquired through an external remote control device. It may provide a flexible control method which is applicable to various application scenarios.

In one embodiment, when the rotating information contains direction information, a playing direction of the video which is currently being displayed is controlled.

The technical solution provided by the embodiment of the present disclosure may have the following beneficial effects. In the embodiment, implementation of controlling a playing direction of a video is provided. By controlling a playing direction based on rotating information, without acquiring additional information, the controlling process may be simplified.

In one embodiment, when the rotating information contains rotating angle information, a playing position of the video which is currently being displayed is controlled.

The technical solution provided by the embodiment of the present disclosure may have the following beneficial effects. In the embodiment, implementation of controlling a playing progress position of a video is provided. By controlling a playing progress position based on rotating information, without acquiring additional information, the controlling process may be simplified.

In one embodiment, when the rotating information contains rotating speed information, a playing speed of the video which is currently being displayed is controlled.

The technical solution provided by the embodiment of the present disclosure may have the following beneficial effects. In the embodiment, implementation of controlling a playing speed of a video is provided. By controlling a playing speed based on rotating information, without acquiring additional information, the controlling process may be simplified.

In one embodiment, the method further includes:
during fast playing (or fast forwarding) of the video which is currently being played, displaying a preview image of the video according to the progress of the fast playing.

The technical solution provided by the embodiment of the present disclosure may have the following beneficial effects. In the embodiment, during fast playing of the video, by providing a preview image, it is convenient for the user to learn about the contents of the image during fast playing, and it may allow more accurate control of fast playing.

In a second aspect of the embodiments of the present disclosure, there is provided a device for controlling a playing state, including:
an acquiring module configured to, upon receipt of a starting event triggered by a peripheral component of a smart device, acquire rotating information of the smart device; and
a controlling module configured to control a playing state of multimedia which is currently being played according to the starting event and the rotating information.

In one embodiment, the device further includes:
a first triggering module configured to, when the peripheral component is a physical button disposed outside of a housing of the smart device, or is a physical button on a remote control device bound with the smart device, trigger the starting event by operating the physical button.

In one embodiment, the device further includes:
a second triggering module configured to, when the peripheral component is a virtual button disposed outside of a housing of the smart device, or is a virtual button on a remote control device bound with the smart device, trigger the starting event by touching the virtual button.

In one embodiment, the acquiring module includes:
a first acquiring sub-module configured to acquire the rotating information through a sensor inside the smart device.

In one embodiment, the acquiring module includes:
a second acquiring sub-module configured to acquire the rotating information through a remote control device bound with the smart device.

In one embodiment, the device further includes:
a direction module configured to, when the rotating information contains direction information, control a playing direction of the video which is currently being displayed.

In one embodiment, the device further includes:
a skipping module configured to, when the rotating information contains rotating angle information, control a playing position of the video which is currently being displayed.

In one embodiment, the device further includes:
a speed module configured to, when the rotating information contains rotating speed information, control a playing speed of the video which is currently being displayed.

In one embodiment, the device further including:
a preview module configured to, during fast playing of the video which is currently being played, display a preview image of the video according to the progress of the fast playing.

In a third aspect of the embodiments of the present disclosure, there is provided a device for controlling a playing state, including:
a processor; and
a memory for storing instructions executable by the processor;
wherein the processor is configured to perform:
upon receipt of a starting event triggered by a peripheral component of a smart device, acquiring rotating information of the smart device; and
controlling a playing state of multimedia which is currently being played according to the starting event and the rotating information.

In a fourth aspect of the embodiments of the present disclosure, there is provided a computer program, which when executing on a processor, performs a method according to the first aspect.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for controlling a playing state according to an exemplary embodiment.
Fig. 2 is a flow chart illustrating a method for controlling a playing state according to an exemplary embodiment.
Fig. 3 is a flow chart illustrating a method for controlling a playing state according to an exemplary embodiment.
Fig. 4 is a flow chart illustrating a method for controlling a playing state according to an exemplary embodiment.
Fig. 5 is a block diagram illustrating a device for controlling a playing state according to an exemplary embodiment.
Fig. 6 is a block diagram illustrating a device for controlling a playing state according to an exemplary embodiment.
Fig. 7 is a block diagram illustrating a device for controlling a playing state according to an exemplary embodiment.
Fig. 8 is a block diagram illustrating an acquiring module according to an exemplary embodiment.
Fig. 9 is a block diagram illustrating an acquiring module according to an exemplary embodiment.
Fig. 10 is a block diagram illustrating a device for controlling a playing state according to an exemplary embodiment.
Fig. 11 is a block diagram illustrating a device for controlling a playing state according to an exemplary embodiment.
Fig. 12 is a block diagram illustrating a device for controlling a playing state according to an exemplary embodiment.
Fig. 13 is a block diagram illustrating a device for controlling a playing state according to an exemplary embodiment.
Fig. 14 is a block diagram illustrating a device according to an exemplary embodiment.
Fig. 15 is a block diagram illustrating a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

In the related art, devices such as mobile phones, personal computers and televisions may have video playing features. Conventionally, when a user is watching a video, the user often desires to play fast forward an uninteresting part of the video, and play fast backward (or rewind) an interesting part or a missing part of the video. Control of playing fast forward or backward may be implemented through a corresponding button on a remote controller. For a device with a touch screen, control of playing fast forward or backward may be implemented by dragging a sliding block on a progress bar in an interface. However, in case where there is no fast forward or backward playing button on a remote controller, or it is inconvenient for the user to operate a touch screen, the above solutions may not be applicable.

In order to solve the above problems, in an embodiment of the present disclosure, there is provided a method for controlling fast forward playing a video by obtaining rotating information of a device when the device is rotated, which does not require too many control buttons, and does not require user operation performed on the touch screen, and which can provide convenience for the user to control fast playing of the video.

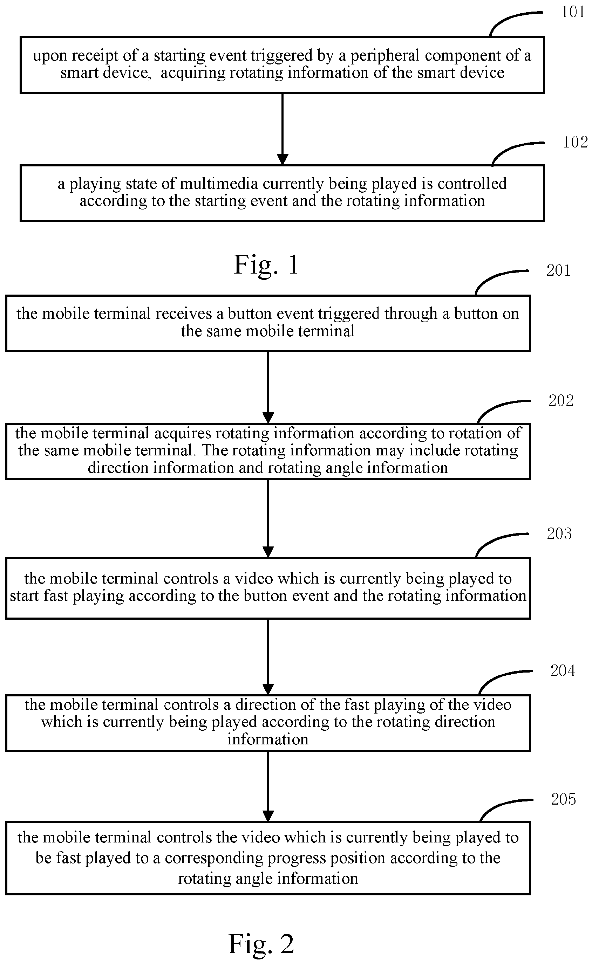

Fig. 1 is a flow chart illustrating a method for controlling a playing state according to an exemplary embodiment. As shown in Fig. 1, the method may be implemented by a device with a video playing feature, such as a mobile terminal, and includes the following steps.

At step 101, upon receipt of a starting event triggered by a peripheral component of a smart device, rotating information of the smart device is acquired.

At step 102, a playing state of multimedia currently being played is controlled according to the starting event and the rotating information.

In the embodiment, the peripheral component may be a button, a joystick or other components. The starting event may be a button event when a button is triggered, and a joystick rotating event of a remote-controlled joystick. The multimedia may include a video or an audio and so on. The playing state may include a playing speed, a playing angle or a playing direction, and so on.

In the embodiment, the playing state of the multimedia may be controlled according to rotating information. Moreover, by controlling based on both conditions of the starting event of the peripheral component and rotating information, it can more accurately control fast forward playing of the video, and reduce the probability of false control.

For example, when control fast forward playing of a video is performed through a button, in the embodiment, the method may also be implemented by obtaining rotating information upon receipt of a button event triggered through the button. The video which is being currently played is controlled to be fast played according to the button event and the rotating information.

In the embodiment, rotating information may be acquired upon receipt of a button event triggered through the button. Based on both of the conditions of the button event and rotating information, the video may be controlled to be played fast forward. Compared with a solution in which the control is based on a single condition, it can more accurately control the video, and may distinguish such control from other kinds of controls of the video.

If rotating information is acquired before receipt of a button event triggered through the button, other kinds of controls of the video may be performed according to the rotating information. Once a button event triggered through the button is received, the control of fast forward playing of the video will be enabled.

In the embodiment, at step 101, rotating information may be obtained continuously. Fast forward playing of the video may be controlled according to the continuously obtained rotating information. If the rotation operation is stopped and no more rotating information is obtained, or the rotating information obtained is 0, fast forward playing of the video may be ceased.

In an embodiment, the button event may include: an event of long press on one or more buttons, an event of double pressing one or more buttons, or an event of clicking multiple buttons.

In the embodiment, the button event may be of various kinds, and may be applicable to various application scenarios.

In the embodiment, for example, when the button event is an event of long press on one or more buttons, and when the long press operation is started, the control of fast forward playing of the video is enabled, and when the long press operation stops, the fast forward playing of the video is ceased.

For example, when the button event is an event of double clicking one or more buttons, or an event of clicking multiple buttons, the control of fast forward playing of the video is enabled when the button event is firstly generated. When another button event is generated, that is, the same set of one or more buttons are pressed again, or the same set of multiple buttons are pressed again, the fast forward playing of the video is ceased.

When the fast forward playing of the video is ceased, acquiring rotating information may be ceased. Alternatively, if rotating information is continued to be acquired, acquiring rotating information may be treated as a single event.

In an embodiment, the peripheral component may be a physical button disposed outside of the housing of the smart device, or may be a physical button on a remote control device bound with the smart device. The starting event may be triggered by operating the physical button.

In the embodiment, the starting event may be triggered by physical buttons of various devices, which may be applicable to various application scenarios.

In an embodiment, the peripheral component may be a virtual button disposed outside of the housing of the smart device, or may be a virtual button on a remote control device bound with the smart device. The starting event may be triggered by touching the virtual button.

In the embodiment, the starting event may be triggered by virtual buttons of various devices, which may be applicable to various application scenarios.

In the embodiment, the method may be performed by a mobile terminal, a personal computer, a television, and so on. The button may be a button of a virtual and reality wearable display device (VR glasses), a mobile terminal, a remote control stick, and so on. The button may be a button of the smart device, or a button of a device coupled to the smart device.

For example, when the method is performed by a mobile terminal, a virtual button or a hardware button of the mobile terminal may be triggered, and it may be considered as that the mobile terminal receives a button event. Alternatively, the mobile terminal is connected to a pair of VR glasses (in a wired or wireless way). In this case, when the button on the VR glasses are clicked or pressed for an extended period, the VR glasses may send the button event generated through the triggered button to the mobile terminal. Then, the mobile terminal may receive the button event. The mobile terminal may acquire rotating information according to the rotation of the same mobile terminal, and control fast playing of the video according to the button event and the rotating information.

Alternatively, for example, the VR glasses may acquire a button event generated through a button of the same pair of VR glasses, or through a remote control stick. The VR glasses may send the button event to the mobile terminal, and the mobile terminal may control fast playing of the video according the received button event.

In an embodiment, the step 101 includes a step A1.

At step A1, the rotating information is acquired through a sensor inside the smart device.

In the embodiment, the rotating information may be acquired through a sensor of the same device. It may provide a flexible control method which is applicable to various application scenarios.

In an embodiment, the step 101 includes a step A2.

At step A2, the rotating information is acquired through a remote control device bound with the smart device.

In the embodiment, the rotating information may be acquired through an external remote control device. It may provide a flexible control method which is applicable to various application scenarios.

In the embodiments, the rotating information may be acquired through a sensor inside the smart device, or may be acquired through an external device. For example, the rotating information may be acquired through a bound peripheral device such as a VR wearable display device. Alternatively, the rotating information may be acquired through a bound mobile terminal. Alternatively, the rotating information may be acquired through a bound remote control stick. The various devices may be bound via a wireless communication protocol such as WIFI or Bluetooth.

In the embodiment, the method may be performed by a mobile terminal, a personal computer, a television, and so on. The device for directly acquiring the rotating information may be a VR wearable display device (VR glasses), a mobile terminal, a remote control stick, and so on. That is, the device for acquiring the rotating information may be a device externally connected to the smart device, and in cooperation with the device for generating the button event. In the embodiment, the device for generating a button event, a device for sensing the rotating information and a device for controlling playing of the video may be the same device, or may be two or three devices.

For example, a virtual button or a hardware button of the mobile terminal may be triggered, and it may be considered as that the mobile terminal receives a button event. The mobile terminal may acquire rotating information through rotation of the same mobile terminal. The mobile terminal may take charge of controlling playing of the video. Therefore, the mobile terminal control fast playing of the video according to a button event generated by the same mobile terminal and rotating information acquired by the same mobile terminal.

Alternatively, for example, the pair of VR glasses receives a button event through a button of the same pair of VR glasses, and the pair of VR glasses contains a sensor such as a gyroscope, and acquires rotating information through rotation of the same pair of VR glasses. In this case, the mobile terminal may take charge of controlling playing of the video. The VR glasses may send the button event and the rotating information to the mobile terminal. Then, the mobile terminal may control fast playing of the video according to the received button event and the rotating information.

In the embodiment, the button event and the rotating information may be used to trigger the fast playing of the video. Fast playing may be not necessarily controlled at a time instance, and may be controlled for a continuous time period. During continuous control of fast playing, the fast playing may be controlled according to the continuously acquired rotating information.

In an embodiment, the rotating information may include direction information for controlling the playing direction of the multimedia currently being played.

For example, the direction of fast playing of the video currently being displayed may be controlled according to the rotating direction information.

In the embodiment, the direction of fast playing may include fast forward playing and fast backward playing.

The rotating direction information may include rotating leftward or rotating rightward. For example, rotating leftward means controlling fast backward playing the video, and rotating rightward means controlling fast forward playing the video.

Alternatively, the rotating direction information may include rotating upward or rotating downward. For example, rotating upward means controlling fast backward playing the video, and rotating downward means controlling fast forward playing the video.

Corresponding relationship between the rotating direction information and the direction of fast playing may be configured or set in advance, or may be configured by the user as desired.

In one embodiment, when the rotating information includes rotating angle information, the playing position of the multimedia currently being played may be controlled accordingly.

For example, a playing progress position of the video currently being played may be controlled according to the rotating angle information.

The corresponding relationship between the rotating angle information and the progress position may be set in advance. For example, when the rotating angle changes 5 degrees, the progress position changes 5% of a total length of the video. After fast forward playing of the video is started, rotating information may be acquired every 0.5 second, to determine rotating angle information. For example, when the rotating angle changes 5 degrees every 0.5 second, the playing progress position changes 5% every 0.5 second.

Alternatively, the rotation may be performed once and ceased. The rotating angle information may be acquired when the rotation is ceased, and the video may be controlled directly to a corresponding progress position according to the rotating angle information.

In the embodiment, the initial position of the rotation may be determined at the time when the button event is received.

In one embodiment, when the rotating information includes rotating speed information, the playing speed of the multimedia currently being played may be controlled accordingly.

For example, the playing speed of the multimedia currently being played may be controlled according to the rotating speed information.

The corresponding relationship between the rotating speed information and the speed of the fast playing may be set in advance. The faster the rotating speed is, the faster the speed of the fast playing is. For example, after the fast playing is started, rotating information is acquired once every 0.5 second to determine rotating speed information. For example, the rotating speed information is 5 degrees per second, the video may be controlled to be displayed fast forward at a speed of 5% (of the total length of the video) per second. When the rotation is ceased, the fast playing of the video is ceased.

In the embodiment, the initial position of the rotation may be determined at the time when the button event is received.

In one embodiment, the method also includes: during fast playing of the video which is currently being played, a preview image of the video is displayed according to the progress of the fast playing.

Fast playing may be a continuous process, and in order for the user to quickly learn about the general contents of the video during the process of fast playing, to more accurately control the video to be fast played to a desired progress position, in the embodiment, a preview image may be provided. The preview image may be a video image extracted from a corresponding fragment of the video being fast played. The preview image may be a thumbnail of the original video image, or a bottom-layer image of the original video image. Since the user generally does not require a high quality version of the video image during fast playing, and the image will be displayed only for a very short moment. By using a fingernail image or a base image, the decompression process of the image may be reduced, and the preview image may be acquired quickly.

The preview image may be acquired in many ways. For example, a frame of preview image may be acquired every 5 frames. Alternatively, a frame of preview image at a current playing position may be acquired every 0.5 second. The interval between two adjacent frames of preview images may be relevant to the rotating speed.

Hereinafter, implementation of the method will be described in detail with reference to some embodiments.

Fig. 2 is a flow chart illustrating a method for controlling a playing state according to an exemplary embodiment. As shown in Fig. 2, the method may be implemented by a device with a video playing feature, such as a mobile terminal, and includes the following steps.

At step 201, the mobile terminal receives a button event triggered through a button on the same mobile terminal.

At step 202, the mobile terminal acquires rotating information according to rotation of the same mobile terminal. The rotating information may include rotating direction information and rotating angle information.

At step 203, the mobile terminal controls a video which is currently being played to start fast playing according to the button event and the rotating information.

At step 204, the mobile terminal controls a direction of the fast playing of the video which is currently being played according to the rotating direction information.

At step 205, the mobile terminal controls the video which is currently being played to be fast played to a corresponding progress position according to the rotating angle information.

Initially, steps 203, 204 and 205 may be performed simultaneously.

Steps 202 and 205 may also be performed repeatedly to implement continuous fast playing. When acquiring of rotating information is ceased, or the rotating information is 0, or when the triggering of the button event is ceased, the fast playing is ceased.

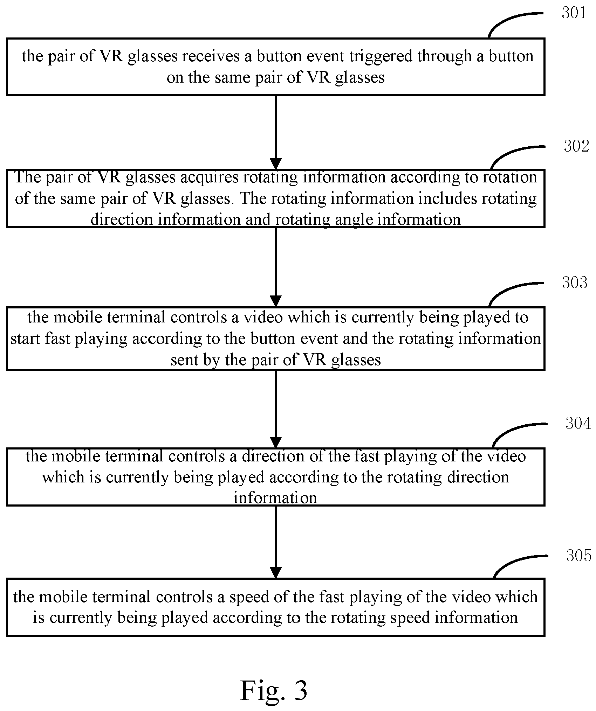

Fig. 3 is a flow chart illustrating a method for controlling a playing state according to an exemplary embodiment. As shown in Fig. 3, the method may be implemented by a mobile terminal and a pair of VR glasses, and includes the following steps.

At step 301, the pair of VR glasses receives a button event triggered through a button on the same pair of VR glasses.

At step 302, the pair of VR glasses acquires rotating information according to rotation of the same pair of VR glasses. The rotating information may include rotating direction information and rotating angle information.

At step 303, the mobile terminal controls a video which is currently being played to start fast playing according to the button event and the rotating information sent by the pair of VR glasses.

At step 304, the mobile terminal controls a direction of the fast playing of the video which is currently being played according to the rotating direction information.

At step 305, the mobile terminal controls a speed of the fast playing of the video which is currently being played according to the rotating speed information.

Steps 302 and 305 may also be performed repeatedly to implement continuous fast playing. That is, the pair of VR glasses may continuously acquire rotating information and continuously send the acquired rotating information to the mobile terminal. The mobile terminal may continuously control the fast playing according to the received rotating information.

With triggering of a button event, the rotating direction may be changed from left to right or from right to left, for example, and is not necessarily only one direction. Accordingly, the fast playing may be changed from forward to backward or from backward to forward, for example.

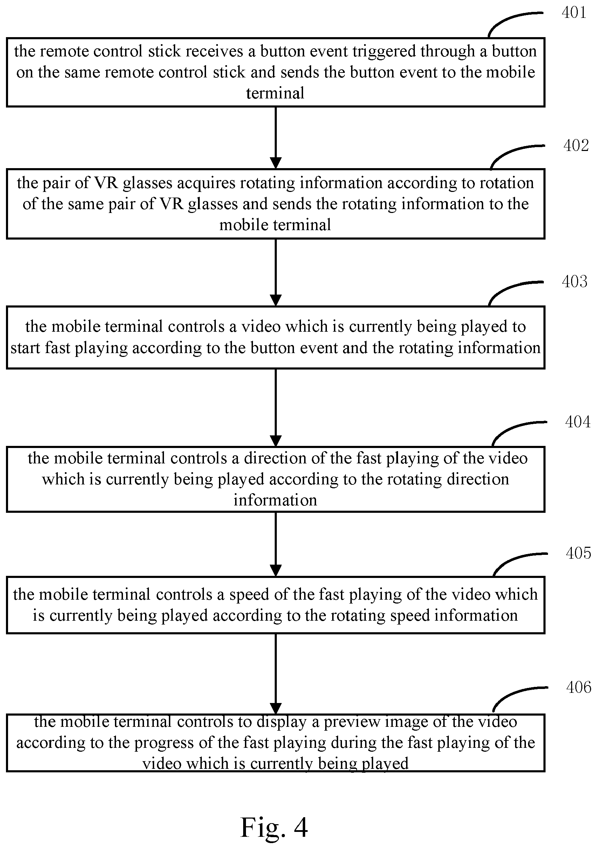

Fig. 4 is a flow chart illustrating a method for controlling a playing state according to an exemplary embodiment. As shown in Fig. 4, the method may be implemented by a mobile terminal, a remote control stick and a pair of VR glasses, and includes the following steps.

At step 401, the remote control stick receives a button event triggered through a button on the same remote control stick and sends the button event to the mobile terminal.

At step 402, the pair of VR glasses acquires rotating information according to rotation of the same pair of VR glasses and sends the rotating information to the mobile terminal. The rotating information may include rotating direction information and rotating speed information.

At step 403, the mobile terminal controls a video which is currently being played to start fast playing according to the button event and the rotating information.

At step 404, the mobile terminal controls a direction of the fast playing of the video which is currently being played according to the rotating direction information.

At step 405, the mobile terminal controls a speed of the fast playing of the video which is currently being played according to the rotating speed information.

At step 406, the mobile terminal controls to display a preview image of the video according to the progress of the fast playing during the fast playing of the video which is currently being played.

The implementation of the control a playing state is described in the above. The control process may be implemented by a device such as a mobile terminal. Hereinafter, the internal structure and function of the device will be described.

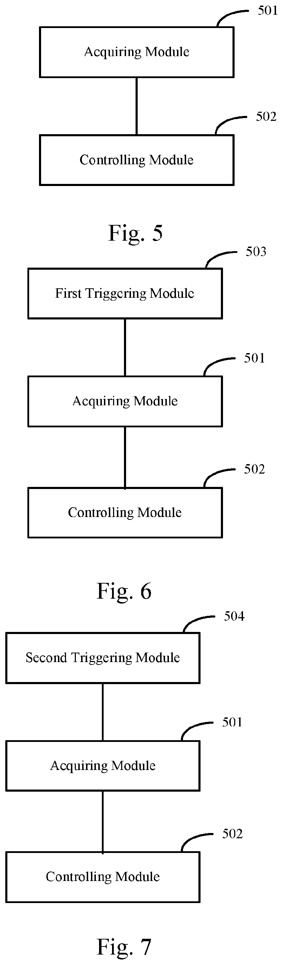

Fig. 5 is a block diagram illustrating a device for controlling a playing state according to an exemplary embodiment. As shown in Fig. 5, the device includes an acquiring module 501 and a controlling module 502.

The acquiring module 501 is configured to, upon receipt of a starting event triggered by a peripheral component of a smart device, acquire rotating information of the smart device. For example, upon receipt of a button event triggered by a button, rotating information is acquired.

The controlling module 502 is configured to control a playing state of multimedia which is currently being played according to the starting event and the rotating information. For example, the video which is being currently played is controlled to be fast played according to the button event and the rotating information.

In one embodiment, the button event may include: an event of long press on one or more buttons, an event of double pressing one or more buttons, or an event of clicking multiple buttons.

In one embodiment, the button may include: a hardware button of a bound VR wearable display device, a virtual button or a hardware button on a bound mobile terminal, or a hardware button on a bound remote control stick.

In one embodiment, as shown in Fig. 6, the device further includes:
a first triggering module 503 configured to, when the peripheral component is a physical button disposed outside of a housing of the smart device, or is a physical button on a remote control device bound with the smart device, trigger the starting event by operating the physical button.

In one embodiment, as shown in Fig. 7, the device further includes:
a second triggering module 504 configured to, when the peripheral component is a virtual button disposed outside of a housing of the smart device, or is a virtual button on a remote control device bound with the smart device, trigger the starting event by touching the virtual button.

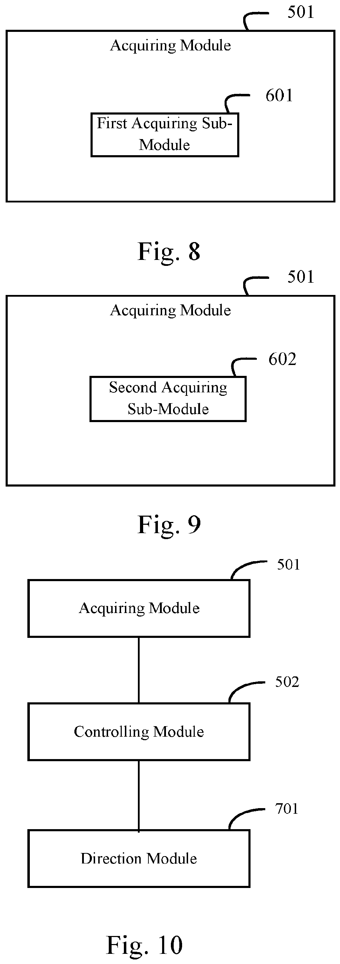

In one embodiment, as shown in Fig. 8, the acquiring module 501 includes:
a first acquiring sub-module 601 configured to acquire the rotating information through a sensor inside the smart device.

In one embodiment, as shown in Fig. 9, the acquiring module 501 includes:
a second acquiring sub-module 602 configured to acquire the rotating information through a remote control device bound with the smart device.

In one embodiment, the acquiring module 501 acquires rotating information through a bound VR wearable display device. Alternatively, the rotating information may be acquired through a bound mobile terminal. Alternatively, the rotating information may be acquired through a bound remote control stick.

In one embodiment, the rotating information contains direction information.

As shown in Fig. 10, the device further includes: a direction module 701.

The direction module 701 is configured to, when the rotating information contains direction information, control a playing direction of the video which is currently being displayed. For example, a playing direction of the video which is currently being displayed is controlled according to the rotating direction information.

In one embodiment, the rotating information contains rotating angle information.

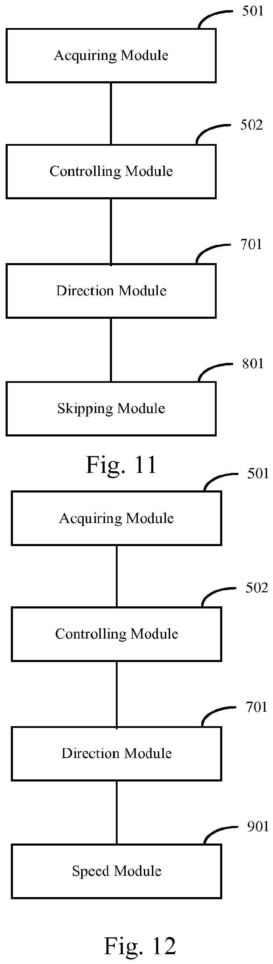

As shown in Fig. 11, the device further includes: a skipping module 801.

The skipping module 801 is configured to, when the rotating information contains rotating angle information, control a playing position of the video which is currently being displayed. For example, the video which is currently being displayed is controlled to fast played to a corresponding progress position according to the rotating angle information.

In one embodiment, the rotating information contains rotating speed information.

As shown in Fig. 12, the device further includes: a speed module 901.

The speed module 901 is configured to, when the rotating information contains rotating speed information, control a playing speed of the video which is currently being displayed. For example, the playing speed of the video which is currently being played may be controlled according to the rotating speed information.

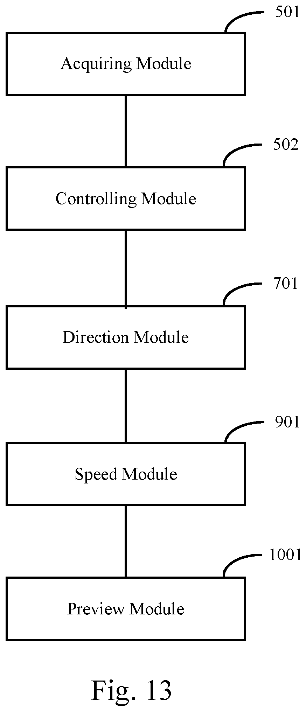

In one embodiment, as shown in Fig. 13, the device further including: a preview module 1001.

The preview module 1001 is configured to, during fast playing of the video which is currently being played, display a preview image of the video according to the progress of the fast playing.

With respect to the devices in the above embodiments, the specific manners for performing operations for individual modules therein have been described in detail in the embodiments regarding the relevant methods, which will not be elaborated herein.

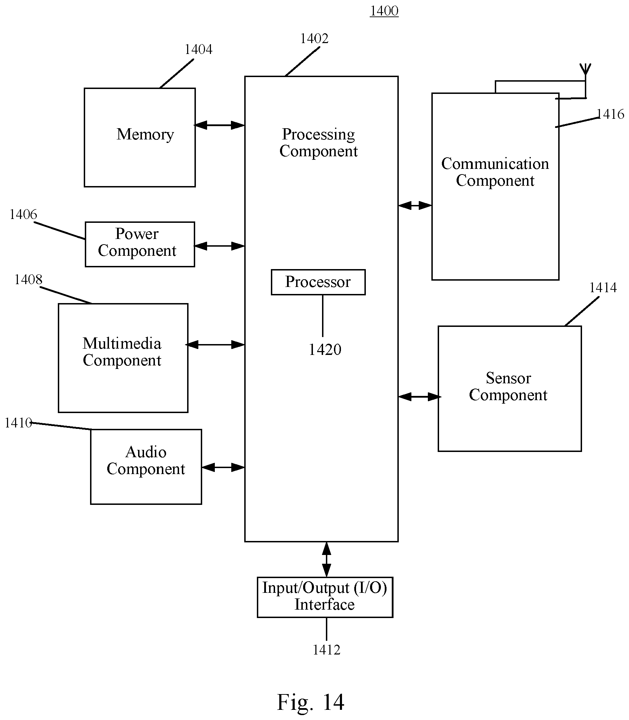

Fig. 14 is a block diagram illustrating a device 1400 for controlling a playing state according to an exemplary embodiment. For example, the device 1400 may be a mobile phone, a computer, a digital broadcast terminal, a messaging device, a gaming console, a tablet, a medical device, exercise equipment, a personal digital assistant, and the like.

Referring to Fig. 14, the device 1400 can include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 can include one or more processors 1420 to execute instructions to perform all or part of the steps in the above described methods. Moreover, the processing component 1402 can include one or more modules which facilitate the interaction between the processing component 1402 and other components. For instance, the processing component 1402 can include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 can include a power management system, one or more power sources, and any other components associated with the generation, management, and distribution of power in the device 1400.

The multimedia component 1408 includes a screen providing an output interface between the device 1400 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1408 includes a front camera and/or a rear camera. The front camera and the rear camera can receive an external multimedia datum while the device 1400 is in an operation mode, such as a photographing mode or a video mode. Each of the front camera and the rear camera can be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal can be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons can include, but are not limited to, a home button, a volume button, a starting button, and a locking button.

The sensor component 1414 includes one or more sensors to provide status assessments of various aspects of the device 1400. For instance, the sensor component 1414 can detect an open/closed status of the device 1400, relative positioning of components, e.g., the display and the keypad of the device 1400. The sensor component 1414 can also detect a change in position of the device 1400 or a component of the device 1400, a presence or absence of user contact with the device 1400, an orientation or an acceleration/deceleration of the device 1400, and a change in temperature of the device 1400. The sensor component 1414 can include a proximity sensor configured to detect the presence of nearby objects without any physical contact. The sensor component 1414 can also include a light sensor, such as a CMOS or CCD image sensor, for use in imaging applications. In some embodiments, the sensor component 1414 can also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium can be a ROM, a RAM, a CD-ROM, a magnetic tape, a floppy disc, an optical data storage device, and the like.

A device for controlling a playing state, including:
a processor; and
a memory for storing instructions executable by the processor;
wherein the processor is configured to perform:
upon receipt of a starting event triggered by a peripheral component of a smart device, acquiring rotating information of the smart device; and
controlling a playing state of multimedia which is currently being played according to the starting event and the rotating information.

The processor may be also configured to perform:
the peripheral component is a physical button disposed outside of a housing of the smart device, or is a physical button on a remote control device bound with the smart device, and the starting event is triggered by operating the physical button.

The processor may be also configured to perform:
the peripheral component is a virtual button disposed outside of a housing of the smart device, or is a virtual button on a remote control device bound with the smart device, and the starting event is triggered by operating the virtual button.

The processor may be also configured to perform:
acquiring rotating information of the smart device includes: acquiring the rotating information through a sensor inside the smart device.

The processor may be also configured to perform:
acquiring rotating information of the smart device includes: acquiring the rotating information through a remote control device bound with the smart device.

The processor may be also configured to perform:
when the rotating information contains direction information, a playing direction of the video which is currently being displayed is controlled.

The processor may be also configured to perform:
when the rotating information contains rotating angle information, a playing position of the video which is currently being displayed is controlled.

The processor may be also configured to perform:
when the rotating information contains rotating speed information, a playing speed of the video which is currently being displayed is controlled.

The processor may be also configured to perform:
the method further includes:
during fast playing of the video which is currently being played, displaying a preview image of the video according to the progress of the fast playing.

A non-transitory computer readable storage medium, when instructions in the storage medium are executed by the processor of a mobile terminal, the mobile termina is enabled to perform the method for controlling a playing state. The method includes:
upon receipt of a starting event triggered by a peripheral component of a smart device, acquiring rotating information of the smart device; and
controlling a playing state of multimedia which is currently being played according to the starting event and the rotating information.

The instructions in the storage medium may also include:
the peripheral component is a physical button disposed outside of a housing of the smart device, or is a physical button on a remote control device bound with the smart device, and the starting event is triggered by operating the physical button.

The instructions in the storage medium may also include:
the peripheral component is a virtual button disposed outside of a housing of the smart device, or is a virtual button on a remote control device bound with the smart device, and the starting event is triggered by operating the virtual button.

The instructions in the storage medium may also include:
acquiring rotating information of the smart device includes: acquiring the rotating information through a sensor inside the smart device.

The instructions in the storage medium may also include:
acquiring rotating information of the smart device includes: acquiring the rotating information through a remote control device bound with the smart device.

The instructions in the storage medium may also include:
when the rotating information contains direction information, a playing direction of the video which is currently being displayed is controlled.

The instructions in the storage medium may also include:
when the rotating information contains rotating angle information, a playing position of the video which is currently being displayed is controlled.

The instructions in the storage medium may also include:
when the rotating information contains rotating speed information, a playing speed of the video which is currently being displayed is controlled.

The instructions in the storage medium may also include:
the method further includes:
during fast playing of the video which is currently being played, displaying a preview image of the video according to the progress of the fast playing.

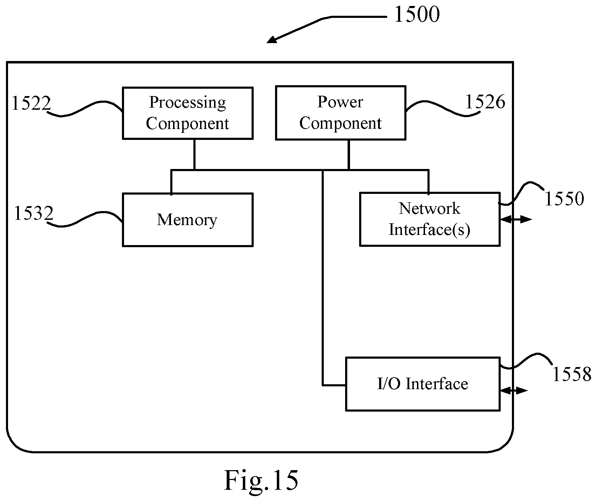

Fig. 15 is a block diagram of a device 1500 for controlling a playing state according to an exemplary embodiment. For example, the device 1500 may be provided as a server. Referring to Fig. 15, the device 1500 includes a processing component 1522 that further includes one or more processors, and memory resources represented by a memory 1532 for storing instructions executable by the processing component 1522, such as application programs. The application programs stored in the memory 1532 may include one or more modules each corresponding to a set of instructions. Further, the processing component 1522 is configured to execute the instructions to perform the above described method for controlling a playing state.

The device 1500 may also include a power component 1526 configured to perform power management of the device 1500, wired or wireless network interface(s) 1550 configured to connect the device 1500 to a network, and an input/output (I/O) interface 1558. The device 1500 may operate based on an operating system stored in the memory 1532, such as Windows Server™, Mac OS X™, Unix™, Linux™, FreeBSD™, or the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for controlling a playing state, **characterized in that** the method comprises:
upon receipt of a starting event triggered by a peripheral component of a smart device,
acquiring (101) rotating information of the smart device or a peripheral device; and
controlling (102) a playing state of multimedia which is currently being played according to the starting event and the rotating information.

2. The method of claim 1, wherein
if the peripheral component is a physical button disposed outside of a housing of the smart device or is a physical button on a remote control device bound with the smart device, the starting event is triggered by operating the physical button; or
if the peripheral component is a virtual button disposed outside of a housing of the smart device or is a virtual button on a remote control device bound with the smart device, the starting event is triggered by operating the virtual button.

3. The method of any preceding claim, wherein acquiring rotating information of the smart device comprises: acquiring the rotating information through a sensor inside the smart device.

4. The method of claim any of claims 1 or 2, wherein acquiring rotating information of the smart device comprises: acquiring the rotating information through a peripheral device in the form of a remote control device bound with the smart device.

5. The method of any preceding claim, wherein
the rotating information contains direction information, and a playing direction of the video which is currently being displayed is controlled; and/or
the rotating information contains rotating angle information, and a playing position of the video which is currently being displayed is controlled; and/or
the rotating information contains rotating speed information, and a playing speed of the video which is currently being displayed is controlled.

6. The method of any preceding claim, wherein the method further comprises:
during fast playing of the video which is currently being played, displaying a preview image of the video according to the progress of the fast playing.

7. A device for controlling a playing state, **characterized in that** the device comprises:
an acquiring module (501) configured to, upon receipt of a starting event triggered by a peripheral component of a smart device, acquire rotating information of the smart device or a peripheral device; and
a controlling module (502) configured to control a playing state of multimedia which is currently being played according to the starting event and the rotating information.

8. The device of claim 7, wherein the device further comprises:
a first triggering module (503) configured to, when the peripheral component is a physical button disposed outside of a housing of the smart device, or is a physical button on a remote control device bound with the smart device, trigger the starting event by operating the physical button; or
a second triggering module (504) configured to, when the peripheral component is a virtual button disposed outside of a housing of the smart device, or is a virtual button on a remote control device bound with the smart device, trigger the starting event by touching the virtual button.

9. The device of claim 7 or 8, wherein the acquiring module (501) comprises:
a first acquiring sub-module (601) configured to acquire the rotating information through a sensor inside the smart device.

10. The device of claim 7 or 8, wherein the acquiring module (501) comprises:
a second acquiring sub-module (602) configured to acquire the rotating information through a peripheral device in the form of a remote control device bound with the smart device.

11. The device of any of claims 7 to 10, wherein the device further comprises:
a direction module (701) configured to, when the rotating information contains direction information, control a playing direction of the video which is currently being displayed; and/or
a skipping module (801) configured to, when the rotating information contains rotating angle information, control a playing position of the video which is currently being displayed; and/or
a speed module (901) configured to, when the rotating information contains rotating speed information, control a playing speed of the video which is currently being displayed.

12. The device of any of claims 7 to 11, wherein the device further comprising:
a preview module (1001) configured to, during fast playing of the video which is currently being played, display a preview image of the video according to the progress of the fast playing.

13. A device for controlling a playing state, **characterized in that** the device comprises:
a processor (1420); and
a memory (1404) for storing instructions executable by the processor;
wherein the processor (701) is configured to perform the method of any of claims 1 to 6.

14. A computer program, which when executing on a processor, performs a method according to any one of claims 1 to 6.
